# EUROPÄISCHE PATENTANMELDUNG

(11) **EP 2 244 104 A2**
(43) Veröffentlichungstag der Anmeldung: **27.10.2010**
(21) Anmeldenummer: 10004109.4
(22) Anmeldetag: 19.04.2010
(51) Int. Cl.: G01S 13/93, G01S 13/86, G01S 13/72, G01S 7/02

(54) **Verfahren und Vorrichtung zum Betrieb eines radargestützten Umfelderkennungssystems**

(30) Priorität: 22.04.2009 DE 102009018311
(71) Anmelder: Valeo Schalter und Sensoren GmbH, 74321 Bietigheim-Bissingen (DE)
(72) Erfinder: Amiot, Eric, 70597 Stuttgart (DE); Kuenzler, Frank, 76703 Kraichtal (DE)

(57) **Zusammenfassung**

Es wird ein Verfahren und eine Vorrichtung zum Betrieb eines radargestützten Umfelderkennungssystems vorgeschlagen, bei dem von einem Standardmodus mit einer vorgegebenen Frequenzbandbreite in einen von zusätzlichen Kriterien anhängigen zeitlich begrenzten Hochauflösungsmodus mit einer erhöhten Frequenzbandbreite schaltbar ist. Die zusätzlichen Kriterien können bei einem radargestützten Umfelderkennungssystem an Fahrzeugen (1) insbesondere von kritischen Fahrsituation abhängig sein, die ein Unfallrisiko bergen oder bei denen eine Objekterkennung im Umfeld des Fahrzeugs nicht eindeutig durchführbar ist.

## Beschreibung

### Stand der Technik

Die Erfindung betrifft ein Verfahren und eine Vorrichtung zum Betrieb eines radargestützten Umfelderkennungssystems, insbesondere zusammen mit einem Fahrassistenzsystem zur Unterstützung eines Fahrers eines Fahrzeugs, gemäß dem Oberbegriff des Anspruchs 1.

Es ist beispielsweise aus der DE 42 42 700 A1 bekannt, dass mindestens ein Radarsensor zur Erfassung von vorausfahrenden oder -liegenden Objekten an einem Fahrzeug angebracht ist. Dieser Radarsensor arbeitet in der Regel im Mikrowellenbereich und ist z. B. ein Baustein eines Fahrzeugsicherheitssystems, bei dem ständig Informationen über den Abstand und die Relativgeschwindigkeit des Fahrzeuges zu anderen Fahrzeugen und zu den Straßengegebenheiten verarbeitet werden.

Insbesondere die Abstandsdaten und/oder die Winkeldaten der erfassten Objekte können dann an ein Auswerte- und Regelsystem weitergegeben werden, das hieraus Regelgrößen ermittelt, mit denen dann Stellsignale für eine Lenkungs- oder Motorleistungssteuerung und/oder einen Bremseingriff erzeugt werden können. Die gewonnenen Informationen können aber auch direkt akustisch oder optisch wiedergegeben werden, zum Beispiel in einem Fahrzeugspiegel, in einem Multimediadisplay oder im Bereich der Armaturen. Es können hierbei jedoch unsichere Situationen auftreten, in denen beispielsweise mehrere nah beieinander befindliche Zielobjekte erfasst werden, wobei jedoch nur ein Zielobjekt für das Fahrassistenz- oder Fahrzeugsicherheitssystem relevant ist und die anderen Objekte zu einem erheblichen Unsicherheitsfaktor bei der Auswertung führen.

Die bisher verwendeten Mikrowellenradarsysteme senden in der Regel auf einer vorgegebenen Frequenz von beispielsweise 24,05 bis 24,25 GHz, folglich mit einer Bandbreite von 200 MHz, wobei die Frequenz und die Bandbreite derart vorgegeben ist, dass Störungen oder Interferenzen mit anderen Radar- oder Funksystemen möglichst vermieden werden.

Da insbesondere jedoch die Bandbreite einen großen Einfluss auf die Erfassungsgenauigkeit hat, ist es für sich gesehen darüber hinaus aus der DE 697 14 028 T1 bekannt, dass eine Erhöhung der Bandbreite durch ein Aussenden mehrerer versetzter schmalbandiger Signale erreicht wird.

Als eine Aufgabe der Erfindung kann es deshalb angesehen werden, ein Verfahren und eine Vorrichtung zum Betrieb eines radargestützten Umfelderkennungssystems so weiterzubilden, dass auf einfache Weise eine Verbesserung der Erfassungsgenauigkeit erreicht wird, ohne einen wesentlichen störenden Einfluss auf andere Systeme zu erzeugen.

### Offenbarung der Erfindung

Die Aufgabe wird erfindungsgemäß gelöst durch ein Verfahren zum Betrieb eines radargestützten Umfelderkennungssystems, bei dem in vorteilhafter Weise von einem Standardmodus mit einer vorgegebenen Frequenzbandbreite in einen von zusätzlichen Kriterien anhängigen zeitlich begrenzten Hochauflösungsmodus mit einer erhöhten Frequenzbandbreite geschaltet werden kann. Insbesondere können die zusätzlichen Kriterien bei einem radargestützten Umfelderkennungssystem an Fahrzeugen für den Nah- oder Mittelbereich von kritischen Fahrsituation abhängig sein, die ein Unfallrisiko bergen oder bei denen eine Objekterkennung im Umfeld des Fahrzeugs nicht eindeutig durchführbar ist.

Dies kann besonders häufig vorkommen, wenn eine Objekterkennung im Umfeld des Fahrzeugs dann nicht eindeutig durchführbar ist, wenn sich mehrere Objekte im Erfassungsbereich des radargestützten Umfelderkennungssystems befinden oder eine besondere Gefahrensituation eine genauere Erkennung verlangt. Die Einschaltung des Hochauflösungsmodus sollte erfindungsgemäß nur dann erfolgen, wenn die Objekte im Erfassungsbereich des Fahrzeugs mit dem Umfelderkennungssystem diesem relativ nahe sind, insbesondere in einer Mehrfahrspur-, Überhol- oder Parksituation.

Mit der Erfindung ist somit sichergestellt, dass durch die zeitlich und ggf. auch räumlich begrenzte sowie von zusätzlichen Kriterien abhängig gemachte Anwendung des Hochauflösungsmodus, eventuelle Störungen oder Interferenzen mit anderen Funksystem sehr gering gehalten werden, sodass eine solche Anwendung auch im praktischen Gebrauch im Straßenverkehr tolerierbar wird.

Eine vorteilhafte Durchführung des zuvor beschriebenen Verfahrens ist erfindungsgemäß mit einer Vorrichtung möglich, bei der das radargestützte Umfelderkennungssystem ein Mikrowellenradar aufweist, das zum Beispiel als Nahbereichsradar im Bereich von 24 GHz mit einer Frequenzbandbreite von ca 200 MHz im Standardmodus arbeitet und der Hochauflösungsmodus eine um einen vorgegebenen Faktor vergrößerte Frequenzbandbreite aufweist; der Faktor kann dabei im Bereich von größer 1 bis 100, vorzugsweise im Bereich von 2 bis 10, liegen, mit einer entsprechenden Bandbreitenerweiterung größer als 200 MHz.

Die Erfindung ist jedoch auch bei anderen Radarsystemen anwendbar, die in einem anderen Frequenzbereich mit anderen Frequenzbandbreiten arbeiten.

Das Mikrowellenradar weist dabei vorzugsweise Radarsensoren auf, die im Frontim Seiten- und/oder im Rückbereich eines Fahrzeugs angeordnet sind, wobei der Erfassungsbereich der jeweiligen Radarsensoren durch Radarkeulen gebildet ist, deren Erfassungswinkel und Auflösungsempfindlichkeit hinsichtlich der jeweils detektierten Abstände von Objekten im ruhenden oder laufenden Verkehr im Bereich des Fahrzeugs durch die Umschaltung vom Standard- in den Hochauflösungsmodus zeitlich begrenzt veränderbar ist. Hierbei ist die Auflösung der gewonnen Signale zur Objekterkennung physikalisch direkt von der Bandbreite des ausgesendeten Radarsignals abhängig, sodass bei einer höheren Bandbreite mit einer höheren Auflösung zum Beispiel auch Objekte, die nah beieinander liegen oder fahren, aber von denen nur ein Objekt für die Situation bedeutend ist, unterschieden werden können.

Zur Auswertung der Kriterien zur Einschaltung des Hochauflösungsmodus können auf einfache Weise auch die im Fahrzeug schon angeordneten Sensoren zur Erkennung von Unfallsituationen (pre-crash) oder sonstiger kritischer Objekte herangezogen werden. Diese im Fahrzeug angeordneten Sensoren können beispielsweise Geschwindigkeitsensoren, Lenksensoren, Gierratensensoren, Kameras oder Ultraschallsensoren zur Erfassung des Nahbereichs des Fahrzeugs sein. Es können aber Informationen aus anderen Fahrasssitenz- oder Kontrollsystemen verarbeitet werden, wie zum Beispiel Antiblockier-(ABS) oder Antischlupfsysteme (ESP). Solche heranziehbare Fahrassistenzsysteme können dabei in der Regel auch auf eine Unfallvorhersage (pre-crash), Parkhilfesysteme, Fußgängerkollisionsschutz oder Spurwechselassistenten gerichtet sein.

Vorteilhaft ist es auch, wenn das Umfelderkennungssystem eine computergesteuerte Auswerteeinrichtung aufweist, mit der die Signale weiterer Sensoren zur Erkennung von Kriterien, bei denen vom Standardmodus mit einer vorgegebenen Frequenzbandbreite in den zeitlich begrenzten Hochauflösungsmodus mit einer erhöhten Frequenzbandbreite umschaltbar ist.

Hierzu kann auch in vorteilhafter Weise ein Computerprogrammprodukt gespeichert auf einem computerverwendbaren Medium in der Auswerteeinrichtung vorhanden sein, mit dem computerlesbare Programmmittel, welche bei Ausführung des Computerprogrammprodukts auf einem Mikroprozessor in der Auswerteeinrichtung mit zugehörigen Speichermitteln diese zur Durchführung eines Verfahrens und zur Steuerung der Vorrichtung veranlassen, mit dem eine Auswertung der Signale und die Generierung der Umschaltung ausführbar ist.

### Kurze Beschreibung der Zeichnung

Ausführungsbeispiele der Erfindung sind in den Figuren der Zeichnung dargestellt und nachfolgend näher erläutert. Es zeigen:
- Fig. 1: Eine schematische Darstellung einer Fahrsituation mit einem Fahrzeug mit einem Umfelderkennungssystem und zu erfassenden Objekten.
- Fig. 2: Eine Darstellung einer Trajektorie eines Fahrzeugs mit unterschiedlichen Genauigkeitsbereichen aufgrund der Umschaltung von einem Standardmodus in einen Hochauflösungsmodus.
- Fig. 3: Eine tabellarische Darstellung des Ablaufs der Entscheidung zu einer Umschaltung von dem Standardmodus in den Hochauflösungsmodus.

### Wege zur Ausführung der Erfindung

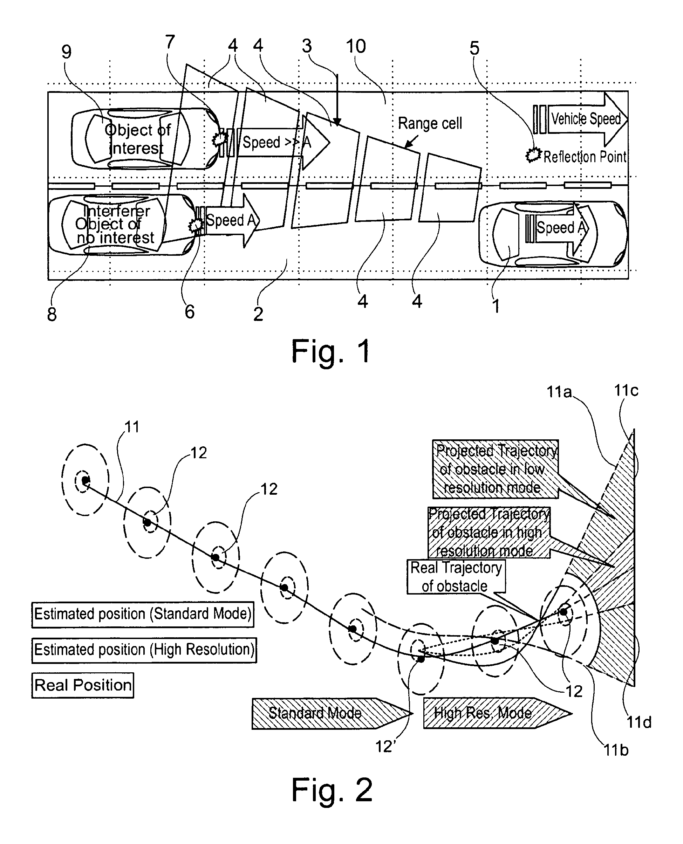

Figur 1 zeigt eine schematische Darstellung einer Fahrsituation mit einem Fahrzeug 1, das sich mit einer Geschwindigkeit A auf einer Fahrspur 2 einer Fahrbahn bewegt und hier im hinteren Bereich ein Mikrowellenradar als Bestandteil eines Umfelderkennungssystems aufweist. Das Mikrowellenradar arbeitetet, wie häufig üblich im Bereich von 24 GHz mit einer Standardbandbreite von 200MHz und hat eine Radarkeule mit einem Erfassungsbereich 3, der hier schematisch in Zellen 4 unterteilt ist, die jeweils einen nicht mehr unterscheidbaren Bereich hinsichtlich der gemessenen Abstands- und Winkeldaten kennzeichnen. Schematisch sind hier noch Reflexionspunkte 5 eines stehenden Objekts und Reflexionspunkte 6 und 7 an fahrenden Objekten eingezeichnet.

Der Reflexionspunkt 6 ist hier ein Fahrzeug 8 das sich ebenfalls mit der Geschwindigkeit A hinter dem Fahrzeug 1 auf der gleichen Fahrspur 2 bewegt. Der Reflexionspunkt 6 ist ein Fahrzeug 9, das sich mit einer höheren Geschwindigkeit >>A auf einer benachbarten Fahrspur 10 bewegt und somit ein überholendes Fahrzeug darstellt.

Aus der Ansicht nach der Figur 1 ist ferner zu entnehmen, dass sich beide Fahrzeuge 8 und 9 in einer gemeinsamen Zelle 4 des Mikrowellenradars befinden. Das Umfelderkennungssystem ist somit bei verschiedenen Objekten innerhalb einer Zelle 4 relativ blind, da alle verwertbaren Informationen, wie Abstand und Erfassungswinkel gleich sind und somit nicht zu einer Unterscheidung der Objekte führen können.

Es ist hieraus aber auch ersichtlich, dass lediglich das Fahrzeug 9 ein für das Umfelderkennungssystem des Fahrzeugs 1 interessantes Objekt darstellt und dass das Fahrzeug 8 für die aktuelle Überholsituation unbedeutend ist. Mit dem erfindungsgemäßen Verfahren wird nun kurzzeitig eine Erhöhung der Auflösung hinsichtlich der Entfernung und ev. auch des Erfassungswinkels durch eine Erhöhung der Frequenzbandbreite des Mikrowellenradars bewirkt, die zu einer entscheidenden Verbesserung der Umfelderfassung und der Erkennung von kritischen Situationen führt; hier speziell zu einer separierten Erfassung des wichtigen Fahrzeugs 9.

In Figur 2 ist eine Trajektorie 11, zum Beispiel des Fahrzeugs 1 nach der Figur 1, mit dem Umfelderfassungssystem in einer anderen Fahrsituation in einer schematischen Draufsicht gezeigt. Mit Punkten 12 sind jeweils einzelne Auswertezeitpunkte des Umfelderkennungssystems im Verlauf der realen Trajektorie 11 angedeutet. Bei einem Punkt 12' wird nun eine Situation detektiert, die zu einer zuvor beschriebenen Umschaltung von einem Standardmodus in einen Hochauflösungsmodus führen soll, wobei die zusätzlich auszuwertenden Kriterien, die diese Umschaltung zeitlich begrenzt herbeiführen, weiter unten erläutert werden.

Mit den Linien 11a und 11b wird ein Bereich einer möglichen Trajektorie 11 angedeutet, wenn das Umfelderkennungssystems im Standardmodus verbleibt und mit den Linien 11c und 11d wird ein Bereich einer möglichen Trajektorie 11 angedeutet, wenn das Umfelderkennungssystems in den Hochauflösungsmodus umschaltet. Hieraus ist somit erkennbar, wie mit dem Hochauflösungsmodus eine sehr viel genauere Steuerung des Fahrzeugs 1 möglich ist.

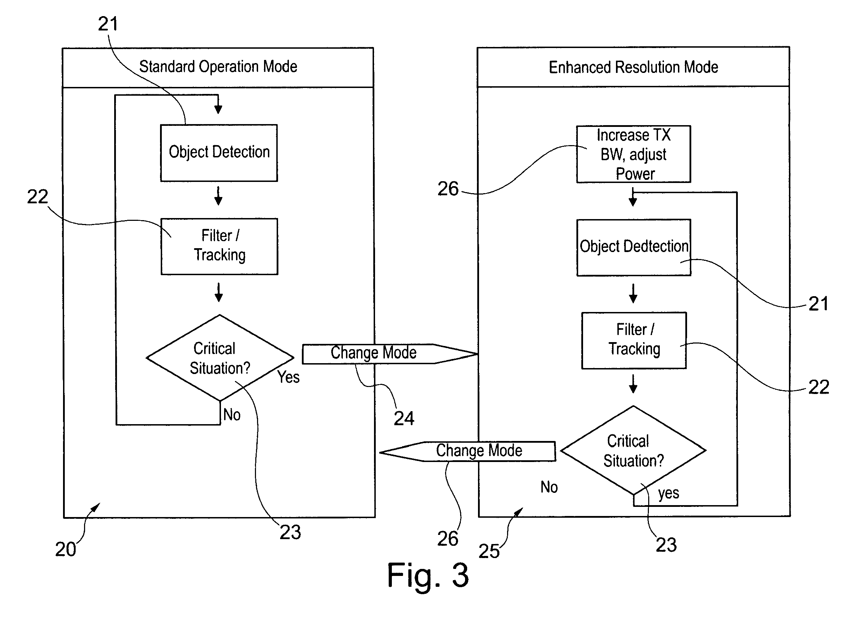

Anhand einer tabellarischen Darstellung des Ablaufs der Entscheidung zu einer Umschaltung von dem Standardmodus in den Hochauflösungsmodus nach Figur 3 werden nun die einzelnen Situation erläutert. Ein Ablaufplan 20 zeigt zunächst den Standardmodus mit normaler Frequenzbandbreite des Mikrowellenradars. Block 21 stellt die Objekterfassung mit dem Mikrowellenradar und ggf. weiteren Sensorsystemen dar; nach einem Filter-Trackingbaustein 22 erfolgt in Block 23 die Entscheidung, ob es sich um eine kritische Situation handelt; wenn nein, dann wird weiterhin eine Umfelderfassung im Standardmodus betrieben, wenn ja, dann wird gemäß Pfeil 24 der Ablauf nach einem Ablaufplan 25 in Gang gesetzt.

Nach dem Ablaufplan 25 gemäß der Figur 3 wird nun die Frequenzbandbreite und ggf. auch die Leistung des Mikrowellenradars erhöht, bevor gemäß Block 21 die Objekterfassung durchgeführt wird. Auch hier wird im Block 23 die Entscheidung durchgeführt, ob es sich um eine kritische Situation handelt; wenn nein, dann wird die Umfelderfassung wieder gemäß Pfeil 26 in den Standardmodus zurückgesetzt, wenn ja, dann wird weiterhin eine Umfelderfassung im Hochauflösungsmodus nach dem Ablaufplan 25 betrieben.

Nachfolgend werden einige Situationen beschrieben, die im Block 23 nach den Ablaufplänen 20 und 25 der Figur 3 ausgewertet werden und dann eventuell zu der zuvor erwähnten Umschaltung von einem Standardmodus in einen Hochauflösungsmodus führen soll, wobei hier überwiegend von einer Vorwährts-Fahrsituation ausgegangen wird.
- Wenn ein vorausfahrendes Fahrzeug plötzlich bremst oder ein Stillstand detektiert wird, sodass eine Kollision wahrscheinlich wird, dann kann dies durch die Auswertung des Radarsignals selbst zunächst im Standardmodus und auch unter Zuhilfenahme von beispielsweise Fahrassistenzsystemen (ACC), Lidar-Systemen oder Frontkameras sowie ev. auch durch eine Sensorik im Bremssystem erkannt werden und dann ein erhöhte Auflösung im Hochauflösungsmodus zur besseren Erkennung des Objekts veranlasst werden.
- Wenn das Umfelderkennungssystem die Kontrolle über ev. Objekte verliert, sodass eine Kollision mit Objekten in der Umgebung wahrscheinlich wird, dann kann dies unter Zuhilfenahme von beispielsweise Fahrassistenzsystemen (ACC), Lidar-Systemen oder Front-Seiten oder Rückkameras sowie ev. auch durch eine Sensorik im Bremssystem erkannt werden und dann auch eine erhöhte Auflösung im Hochauflösungsmodus zur besseren Erkennung des Objekts veranlasst werden.
- Wenn beispielsweise eine Front- oder Rückkamera (beim Parkvorgang) eine Kollision mit einem Fußgänger als wahrscheinlich detektiert, kann eine erhöhte Auflösung im Hochauflösungsmodus zur besseren Erkennung des Fußgängers veranlasst werden.
- Eine Parksituation, bei der auch zeitweise eine Rückwärtsfahrsituation vorliegt, kann auch durch eine erhöhte Auflösung im Hochauflösungsmodus zur besseren Erkennung der Parkraumbegrenzungen verbessert werden, wobei diese zum Beispiel durch die geringe Geschwindigkeit (z. B. < 5 Kmh) und/oder durch Gangwechsel von Vorwärts- in Rückwärtsgang oder umgekehrt sowie durch ultraschallbasierende Parkhilfen erkannt werden kann.
- Eine Mehrfachspur- oder Spurwechselsituation kann ebenfalls durch eine erhöhte Auflösung im Hochauflösungsmodus verbessert werden, wobei auch dies unter Zuhilfenahme von beispielsweise Fahrassistenzsystemen (ACC), Lidar-Systemen oder Frontkameras sowie ev. auch durch eine Sensorik im Bremssystem erkannt werden und dann eine erhöhte Auflösung im Hochauflösungsmodus zur besseren Erkennung eines Fahrzeugs in der Nachbarspur veranlasst werden.
- Wenn das Umfelderkennungssystem auf benachbarten Fahrspuren Fahrzeuge detektiert, die an den vorbeigefahren wird, die überholen oder die sich der eigenen Fahrspur zu sehr nähern, dann kann auch dies unter Zuhilfenahme von beispielsweise Fahrassistenzsystemen (ACC), Lidar-Systemen oder Frontkameras sowie ev. auch durch eine Sensorik im Bremssystem und zusätzlich auch durch den Aktivierungszustand von Fahrtrichtungsanzeigern erkannt werden und dann eine erhöhte Auflösung im Hochauflösungsmodus zur besseren Erkennung des Objekts veranlasst werden.

## Patentansprüche

1. Verfahren zum Betrieb eines radargestützten Umfelderkennungssystems bei dem von einem Standardmodus mit einer vorgegebenen Frequenzbandbreite in einen von zusätzlichen Kriterien abhängigen zeitlich begrenzter Hochauflösungsmodus mit einer erhöhten Frequenzbandbreite schaltbar ist.

2. Verfahren nach Anspruch 1, **dadurch gekennzeichnet, dass** die zusätzlichen Kriterien bei einem radargestützten Umfelderkennungssystems an Fahrzeugen (1) insbesondere von kritischen Fahrsituation abhängig sind, die ein Unfallrisiko bergen oder bei denen eine Objekterkennung im Umfeld des Fahrzeugs nicht eindeutig durchführbar ist.

3. Verfahren nach Anspruch 2, **dadurch gekennzeichnet, dass** eine Objekterkennung im Umfeld des Fahrzeugs (1) dann nicht eindeutig durchführbar ist, wenn sich mehrere Objekte im Erfassungsbereich des radargestützten Umfelderkennungssystems befinden.

4. Verfahren nach einem der vorhergehenden Ansprüche 1 oder 2, **dadurch gekennzeichnet, dass** eine Einschaltung des Hochauflösungsmodus nur dann erfolgt, wenn die Objekte im Erfassungsbereich des Fahrzeugs (1) mit dem Umfelderkennungssystem diesem relativ nahe sind, insbesondere in einer Mehrfahrspur-, Überhol- oder Parksituation.

5. Vorrichtung zur Durchführung eines Verfahrens nach einem der vorhergehenden Ansprüche, **dadurch gekennzeichnet, dass** das radargestützte Umfelderkennungssystem ein Mikrowellenradar aufweist, das im Bereich von 24 GHz mit einer Frequenzbandbreite von ca 200 MHz im Standardmodus arbeitet und der Hochauflösungsmodus eine um einen vorgegebenen Faktor vergrößerte Frequenzbandbreite aufweist.

6. Vorrichtung nach Anspruch 5, **dadurch gekennzeichnet, dass** der Faktor im Bereich von größer 1 bis 100 liegt.

7. Vorrichtung nach Anspruch 6, **dadurch gekennzeichnet, dass** der Faktor im Bereich von 2 bis 10 liegt.

8. Vorrichtung nach Anspruch 5, 6 oder 7, **dadurch gekennzeichnet, dass** das Mikrowellenradar Radarsensoren aufweist, die im Front-, im Seiten- und/oder im Rückbereich eines Fahrzeugs (1) angeordnet sind, wobei der Erfassungsbereich (3) der jeweiligen Radarsensoren durch Radarkeulen gebildet ist, deren Erfassungswinkel und Auflösungsempfindlichkeit hinsichtlich der jeweils detektierten Abstände von Objekten im ruhenden oder laufenden Verkehr im Bereich des Fahrzeugs (1) durch die Umschaltung vom Standard- in den Hochauflösungsmodus zeitlich begrenzt veränderbar ist.

9. Vorrichtung nach Anspruch 8, **dadurch gekennzeichnet, dass** zur Auswertung der Kriterien zur Einschaltung des Hochauflösungsmodus die im Fahrzeug (1) angeordneten Sensoren zur Erkennung von Unfallsituationen (pre-crash) mit anderen Fahrzeugen (8,9) oder sonstiger kritischer Objekte heranziehbar sind.

10. Vorrichtung nach Anspruch 9, **dadurch gekennzeichnet, dass** die im Fahrzeug angeordneten Sensoren Geschwindigkeitsensoren, Lenksensoren, Gierratensensoren, Kameras oder Ultraschallsensoren zur Erfassung des Nahbereichs des Fahrzeugs (1) sind und/oder es sind Informationen aus anderen Fahrassistenz- oder Kontrollsystemen verarbeitbar, insbesondere Antiblockier-(ABS) oder Antischlupfsysteme (ESP).

11. Vorrichtung nach einem der Ansprüche 5 bis 10, **dadurch gekennzeichnet, dass** das Umfelderkennungssystem eine computergesteuerte Auswerteeinrichtung aufweist, mit der die Signale weiterer Sensoren zur Erkennung von Kriterien, bei denen vom Standardmodus mit einer vorgegebenen Frequenzbandbreite zu dem zeitlich begrenzten Hochauflösungsmodus mit einer erhöhten Frequenzbandbreite schaltbar ist.

12. Computerprogrammprodukt gespeichert auf einem computerverwendbaren Medium, umfassend computerlesbare Programmmittel, welche bei Ausführung des Computerprogrammprodukts auf einem Mikroprozessor in der Auswerteeinrichtung nach Anspruch 10 mit zugehörigen Speichermitteln oder auf einem Computer diesen zur Durchführung eines Verfahrens und zur Steuerung der Vorrichtung veranlassen, mit dem eine Auswertung der Signale und die Generierung der Umschaltung ausführbar ist.
